# EUROPEAN PATENT APPLICATION

(11) **EP 2 058 680 A1**
(43) Date of publication of application: **13.05.2009**
(21) Application number: 07793022.0
(22) Date of filing: 27.08.2007
(51) Int. Cl.: G02B 5/02, F21S 2/00, F21V 5/00, F21V 5/02, G02F 1/13357, F21Y 103/00

(54) **LIGHT DIFFUSING SHEET AND BACKLIGHT UNIT**

(30) Priority: 29.08.2006 JP 2006231917
(71) Applicant: TAKIRON CO., LTD., Osaka-shi, Osaka 541-0052 (JP)
(72) Inventor: KUROKAWA, Yuji, Osaka-shi Osaka 541-0052 (JP)
(74) Representative: Siegert, Georg
(86) International application number: PCT/JP2007/066548
(87) International publication number: WO 2008/026540

(57) **Abstract**

A subject for the invention is to provide: a light diffusing sheet which, when incorporated in a direct-backlight unit, brings about high uniformity of luminance and a high average luminance; and a backlight unit having the sheet incorporated therein.

The light diffusing sheet of the invention is made of a light-transmitting resin and has a sheet upper surface serving as a light emission side and a sheet lower surface serving as a light entrance side. It has a constitution in which small recesses having a shape which is any of the shapes of an inverted polyangular pyramid, inverted truncated polyangular pyramid, inverted cone, and inverted truncated cone or small protrusions having a shape which is any of the shapes of a polyangular pyramid, truncated polyangular pyramid, cone, and truncated cone have been formed in order in the sheet upper surface and sheet lower surface, and the inclined angle between the horizontal plane and the inclined face or ridgeline of each small recess or small protrusion in the sheet upper surface is larger than the inclined angle between the horizontal plane and the inclined face or ridgeline of each small recess or small protrusion in the sheet lower surface. This constitution improves average luminance and uniformity of luminance. The backlight unit of the invention has a constitution in which the light diffusing sheet has been disposed over linear light sources disposed in parallel in a lengthwise or crosswise direction.

## Description

### TECHNICAL FIELD

The present invention relates to a light diffusing sheet to be incorporated in the backlight unit of a liquid-crystal display for notebook type personal computers, personal computer monitors, television receivers, and the like, especially in the backlight unit of the direct backlight type in which the light diffusing sheet is directly illuminated by linear light sources disposed under (at the back of) the sheet. The invention further relates to a direct-backlight unit having the light diffusing sheet incorporated therein.

### BACKGROUND ART

Know light diffusing sheets to be incorporated in direct-backlight units include: a light diffusing sheet which is a transparent resin sheet containing a light diffusing agent, e.g., organic or inorganic beads, dispersed or incorporated therein; a light diffusing sheet which is a resin sheet having on a surface thereof a coating film containing a light diffusing agent; and a light diffusing sheet having fine recesses and protrusions formed in a surface thereof.

On the other hand, known light diffusing sheets to be incorporated in backlight units of the edge light type, which include a lightguide plate and a light source disposed on one or each of both sides of the plate, include a light diffusing sheet which is a resin sheet having projections of a quadrangular pyramid shape formed on one side in an oblique-line arrangement (patent document 1).

The present applicant also proposed a light diffusing sheet made of a light-transmitting resin as a light diffusing sheet to be incorporated mainly in a backlight unit of the edge light type. This light diffusing sheet has fine recesses having a shape which is any of the shape of an inverted polyangular pyramid, the shape of an inverted truncated polyangular pyramid, the shape of an inverted cone, and the shape of an inverted truncated cone, the recesses having been formed in order on at least one side of the sheet (cited document 2).
Patent Document 1: JP-A-2001-311809
Patent Document 2: International Publication WO 2005/083475, pamphlet

### DISCLOSURE OF THE INVENTION

### PROBLEM THAT THE INVENTION IS TO SOLVE

When the light diffusing sheet according to patent document 1 is incorporated in an edge light type backlight unit so as to be disposed on (in front of) the lightguide plate, diffused light is directed in some degree toward the front direction (direction perpendicular to the liquid-crystal display plane) because the inclined faces of the quadrangular pyramidal projections have the function of refracting light. This light diffusing sheet can hence be expected to produce the effect of improving luminance and reducing luminance unevenness. However, in the case where the light diffusing sheet according to patent document 1 is incorporated in a direct-backlight unit, in which the light diffusing sheet is directly illuminated by linear light sources disposed in parallel, so as to be disposed over the linear light sources, the following problem arises. Regions located over the respective linear light sources have a lower luminance than regions located between the linear light sources to generate bright/dark stripes, resulting in a decrease in uniformity of luminance. The reason for this may be as follows. In those regions in the light diffusing sheet which are located over the respective linear light sources, the direction (direction in horizontal plane) of the light being emitted after having been refracted by the inclined faces of the quadrangular pyramidal projections disposed in an oblique-line arrangement is oblique to the lengthwise direction for the linear light sources. This light is hence less apt to be emitted toward the direction directly above the linear light sources and thereby causes the bright/dark stripes. Consequently, when the light diffusing sheet according to patent document 1 is to be incorporated in a direct-backlight unit so as to be disposed over the linear light sources, it is necessary that two or more sheets of a light diffusing film having a roughened surface, light diffusing film containing a light-diffusing agent, light diffusing film constituted of a resin film and a light-diffusing-agent-containing costing film formed on a surface thereof, or the like should be superposed on the light diffusing sheet of patent document 1 to heighten the uniformity of luminance. There has hence been a problem that the number of assembly steps increases and the cost also increases.

On the other hand, the light diffusing sheet according to patent document 2, when incorporated in an edge light type backlight unit so as to be disposed on the lightguide plate, produces the following effect. The inclined faces and tapered surfaces of the fine recesses have the function of refracting light, and thereby enable the diffused light to have a reduced luminance peak angle and inhibit the light from causing a moire or interference fringe. However, when this light diffusing sheet is incorporated in a direct-backlight unit so as to be disposed over the linear light sources, the uniformity of luminance of this backlight unit is not so satisfactory. In particular, the light diffusing sheet in which the fine recesses have been formed in order only in the sheet upper surface serving as a light emission side has had a problem that the uniformity of luminance is low as in the case of the light diffusing sheet according to patent document 1.

The invention has been achieved under those circumstances. Subjects of the invention are: to provide a light diffusing sheet which, when incorporated in a direct-backlight unit, brings about high uniformity of luminance and a high average luminance; and to provide a backlight unit which has the light diffusing sheet incorporated therein and in which the light diffusing film which has conventionally been necessary can be omitted or reduced in number.

### MEANS FOR SOLVING THE PROBLEM

In order to overcome the problem described above, the invention provides a first light diffusing sheet, which is a light diffusing sheet made of a light-transmitting resin and has a sheet upper surface serving as a light emission side and a sheet lower surface serving as a light entrance side and in which small recesses having a shape which is any of the shape of an inverted polyangular pyramid, the shape of an inverted truncated polyangular pyramid, the shape of an inverted cone, and the shape of an inverted truncated cone or small protrusions having a shape which is any of the shape of a polyangular pyramid, the shape of a truncated polyangular pyramid, the shape of a cone, and the shape of a truncated cone have been formed in order in the sheet upper surface and sheet lower surface. This light diffusing sheet is **characterized in that** the inclined angle between the horizontal plane and the inclined face or ridgeline of each small recess or small protrusion in the sheet upper surface is larger than the inclined angle between the horizontal plane and the inclined face or ridgeline of each small recess or small protrusion in the sheet lower surface.

In the first light diffusing sheet of the invention, it is preferred that the small recesses or small protrusions in the sheet upper surface serving as a light emission side should have been formed in an oblique-line arrangement and the small recesses or small protrusions in the sheet lower surface serving as a light entrance side should have been formed in a lengthwise and crosswise arrangement. It is also preferred that the inclined angle between the horizontal plane and the inclined face or ridgeline of each small recess or small protrusion in the sheet upper surface serving as a light emission side should have been regulated so as to be 40° or larger and not larger than 55°and that the inclined angle between the horizontal plane and the inclined face or ridgeline of each small recess or small protrusion in the sheet lower surface serving as a light entrance side should have been regulated so as to be 10° or larger and smaller than 40°. Furthermore, wider inclined angle ranges may be employed. Namely, it is also preferred that the inclined angle between the horizontal plane and the inclined face or ridgeline of each small recess or small protrusion in the sheet upper surface serving as a light emission side should have been regulated so as to be larger than 35° and not larger than 60° and that the inclined angle between the horizontal plane and the inclined face or ridgeline of each small recess or small protrusion in the sheet lower surface serving as a light entrance side should have been regulated so as to be larger than 5°and smaller than 40°.

The invention further provides a second light diffusing sheet, which is free from the problem described above. This light diffusing sheet is one which is made of a light-transmitting resin and has a sheet upper surface serving as a light emission side and a sheet lower surface serving as a light entrance side and in which small recesses having a shape which is any of the shape of an inverted polyangular pyramid, the shape of an inverted truncated polyangular pyramid, the shape of an inverted cone, and the shape of an inverted truncated cone or small protrusions having a shape which is any of the shape of a polyangular pyramid, the shape of a truncated polyangular pyramid, the shape of a cone, and the shape of a truncated cone have been formed in order in the sheet upper surface and V-shaped small grooves or triangular small ridges have been formed in a parallel arrangement in the sheet lower surface. This light diffusing sheet is **characterized in that** the inclined angle between the horizontal plane and the inclined face or ridgeline of each small recess or small protrusion in the sheet upper surface is larger than the inclined angle between the horizontal plane and the inclined face of each small groove or small ridge in the sheet lower surface.

In the second light diffusing sheet of the invention, it is preferred that the inclined angle between the horizontal plane and the inclined face or ridgeline of each small recess or small protrusion in the sheet upper surface serving as a light emission side should have been regulated so as to be 40° or larger and not larger than 55°and that the inclined angle between the horizontal plane and the inclined face of each small groove or small ridge in the sheet lower surface serving as a light entrance side should have been regulated so as to be 10° or larger and smaller than 40°. Furthermore, wider inclined angle ranges may be employed. Namely, it is also preferred that the inclined angle between the horizontal plane and the inclined face or ridgeline of each small recess or small protrusion in the sheet upper surface serving as a light emission side should have been regulated so as to be larger than 35° and not larger than 60°and that the inclined angle between the horizontal plane and the inclined face of each small groove or small ridge in the sheet lower surface serving as a light entrance side should have been regulated so as to be larger than 5° and smaller than 40°.

The invention furthermore provides a backlight unit characterized by including the first or second light diffusing sheet according to the invention which has been disposed over linear light sources disposed in parallel in a lengthwise or crosswise direction at a given interval.

### ADVANTAGES OF THE INVENTION

Even when a light diffusing sheet made of a light-transmitting resin has the small recesses (small recesses having a shape which is any of the shape of an inverted polyangular pyramid, the shape of an inverted truncated polyangular pyramid, the shape of an inverted cone, and the shape of an inverted truncated cone) or the small protrusions (small protrusions having a shape which is any of the shape of a polyangular pyramid, the shape of a truncated polyangular pyramid, the shape of a cone, and the shape of a truncated cone) formed in the sheet upper surface serving as a light emission side, disposition of this light diffusing sheet over the linear light sources of a direct-backlight unit results in poor uniformity of luminance so long as the sheet lower surface serving as a light entrance side is a flat surface, as supported by the experimental data which will be described later. Consequently, to form the small recesses or small protrusions in the sheet lower surface serving as a light entrance side, as in the first light diffusing sheet according to the invention, or to form the V-shaped small grooves or triangular small ridges in the sheet lower surface serving as a light entrance side, as in the second light diffusing sheet according to the invention, is a means effective in heightening the uniformity of luminance. However, even when the sheet lower surface serving as a light entrance side has the small recesses or small protrusions or the small grooves or small ridges, the uniformity of luminance and average luminance are not sufficiently improved so long as the inclined angle between the horizontal plane and the inclined face or ridgeline of each small recess or small protrusion formed in the sheet upper surface serving as a light emission side is small, as can be seen from the experimental data which will be described later. In contrast, in the first or second light diffusing sheet according to the invention, the inclined angle between the horizontal plane and the inclined face or ridgeline of each small recess or small protrusion formed in the sheet upper surface serving as a light emission side is larger than the inclined angle between the horizontal plane and the inclined face or ridgeline of each small recess or small protrusion formed in the sheet lower side serving as a light entrance side or than the inclined angle between the horizontal plane and the inclined face of each small groove or small ridge formed in the sheet lower surface serving as a light entrance side. Because of this, when the first or second light diffusing sheet is incorporated in a direct-backlight unit so as to be disposed over the linear light sources, both the uniformity of luminance and the average luminance are increased. Consequently, the direct-backlight unit of the invention, which includes the first or second light diffusing sheet disposed over the linear light sources, is effective in omitting the light diffusing films which have conventionally been necessary for heightening uniformity of luminance or in considerably reducing the number of the films. Because of this, the number of parts and the number of assembly steps are reduced, whereby a production cost reduction can be attained.

In the first or second light diffusing sheet of the invention, when the inclined angle between the horizontal plane and the inclined face or ridgeline of each small recess or small protrusion formed in the sheet upper surface serving as a light emission side is 40° or larger and not larger than 55°and when the inclined angle between the horizontal plane and the inclined face or ridgeline of each small recess or small protrusion formed in the sheet lower surface serving as a light entrance side or the inclined angle between the horizontal plane and the inclined face of each small groove or small ridge formed in the sheet lower surface is 10° or larger and smaller than 40°, then the effect of improving uniformity of luminance and the effect of improving average luminance are remarkable as supported by the experimental data which will be described later. This applies to wider inclined angle ranges. Namely, when the inclined angle between the horizontal plane and the inclined face or ridgeline of each small recess or small protrusion formed in the sheet upper surface serving as a light emission side is larger than 35° and not larger than 60°and when the inclined angle between the horizontal plane and the inclined face or ridgeline of each small recess or small protrusion formed in the sheet lower surface serving as a light entrance side or the inclined angle between the horizontal plane and the inclined face of each small groove or small ridge formed in the sheet lower surface is larger than 5° and smaller than 40°, then the effect of improving uniformity of luminance and the effect of improving average luminance are remarkable as supported by the experimental data which will be described later.

In the first light diffusing sheet of the invention, when the small recesses or small protrusions in the sheet upper surface serving as a light emission side have been formed in an oblique-line arrangement and the small recesses or small protrusions in the sheet lower surface serving as a light entrance side have been formed in a lengthwise and crosswise arrangement, then the following advantage is brought about. The inclined faces or tapered surfaces of the small protrusions or small recesses formed in a lengthwise and crosswise arrangement in the sheet lower surface refract and diffuse light to thereby reduce unevenness of the quantity of incident light throughout the whole sheet area. The inclined faces or tapered surfaces of the small recesses or small protrusions formed in an oblique-line arrangement in the sheet upper surface refract and diffuse the light to thereby enable the incident light to be emitted as more even diffused light through the sheet upper surface. As a result, the uniformity of luminance is further improved.

Furthermore, the first light diffusing sheet of the invention in which the sheet upper surface serving as a light emission side has the small recesses and does not have the small protrusions has the following advantage. When this light diffusing sheet is incorporated in a backlight unit together with a light diffusing film superposed thereon, the fear that the small protrusions may damage this light diffusing film can be eliminated. Furthermore, the light diffusing sheet in which both the sheet upper surface serving as a light emission side and the sheet lower surface serving as a light entrance side have the small recesses and neither of these has the small protrusions has the following advantage besides the advantage described above. The small recesses can be easily formed by merely embossing each side of a sheet, and productivity hence improves.

### BRIEF DESCRIPTION OF THE DRAWINGS

[Fig. 1] (1) is a diagrammatic plan view of a light diffusing sheet according to one embodiment of the invention; and (2) is a diagrammatic bottom view of the light diffusing sheet.
[Fig. 2] (1) is an enlarged plan view of part of the sheet upper surface serving as a light emission side of the light diffusing sheet; (2) is a sectional view thereof taken on the line A-A; and (3) is a sectional view thereof taken on the line A1-A1.
[Fig. 3] (1) is an enlarged plan view of part of the sheet lower surface serving as a light entrance side of the light diffusing sheet; and (2) is a sectional view thereof taken on the line B-B.
[Fig. 4] (1) is an enlarged plan view of part of the sheet upper surface serving as a light emission side of a light diffusing sheet according to another embodiment of the invention; and (2) is a sectional view thereof taken on the line C-C.
[Fig. 5] (1) is an enlarged plan view of part of the sheet upper surface serving as a light emission side of a light diffusing sheet according to still another embodiment of the invention; and (2) is a sectional view thereof taken on the line D-D.
[Fig. 6] Fig. 6 is a schematic view illustrating a backlight unit according to the invention.
[Fig. 7] (1) is a diagrammatic plan view of a light diffusing sheet according to a further embodiment of the invention; and (2) is a diagrammatic bottom view of the light diffusing sheet.
[Fig. 8] Fig. 8 is an enlarged sectional view taken on the line E-E of (2) in Fig. 7; the view shows part of the sheet lower surface serving as a light entrance side of the light diffusing sheet.
[Fig. 9] Fig. 9 is a graphic presentation showing relationships between average luminance and the inclined angle of the inclined faces of small recesses formed in order on the light emission side in samples 1 to 8 of Example 1 and in comparative samples 9 to 16 of Comparative Example 1.
[Fig. 10] Fig. 10 is a graphic presentation showing relationships between uniformity of luminance and the inclined angle of the inclined faces of small recesses formed in order on the light emission side in samples 1 to 8 of Example 1 and in comparative samples 9 to 16 of Comparative Example 1.
[Fig. 11] Fig. 11 is a graphic presentation showing relationships between average luminance and the inclined angle of the inclined faces of small recesses formed in order on the light entrance side in samples 17 to 25 and samples 26 to 33 of Example 2.
[Fig. 12] Fig. 12 is a graphic presentation showing relationships between uniformity of luminance and the inclined angle of the inclined faces of small recesses formed in order on the light entrance side in samples 17 to 25 and samples 26 to 33 of Example 2.

### DESCRIPTION OF THE REFERENCE NUMERALS AND SIGNS

1 small recess having the shape of inverted regular quadrangular pyramid
1a inclined face of small recess
θ1, θ2 inclined angle between inclined face of small recess and horizontal plane
11 small recess having the shape of inverted truncated regular quadrangular pyramid
12 small recess having the shape of inverted cone
2 V-shaped small groove
2a inclined face of small groove
θ3 inclined angle between inclined face of small groove and horizontal plane
a length of one side of opening of small recess
b width dimension of small groove
S1, S2 light diffusing sheet
L linear light source
BLU backlight unit

### BEST MODE FOR CURRYING OUT THE INVENTION

Specific embodiments of the invention are described below in detail by reference to drawings.

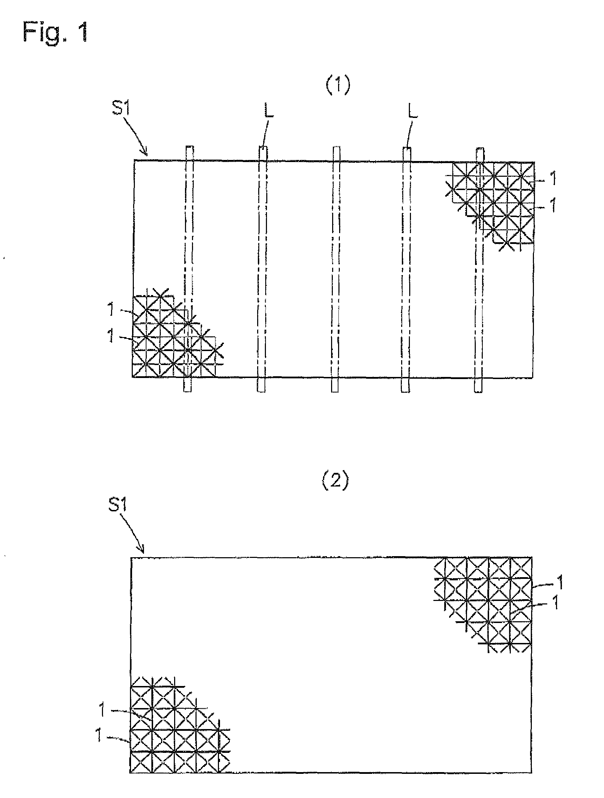

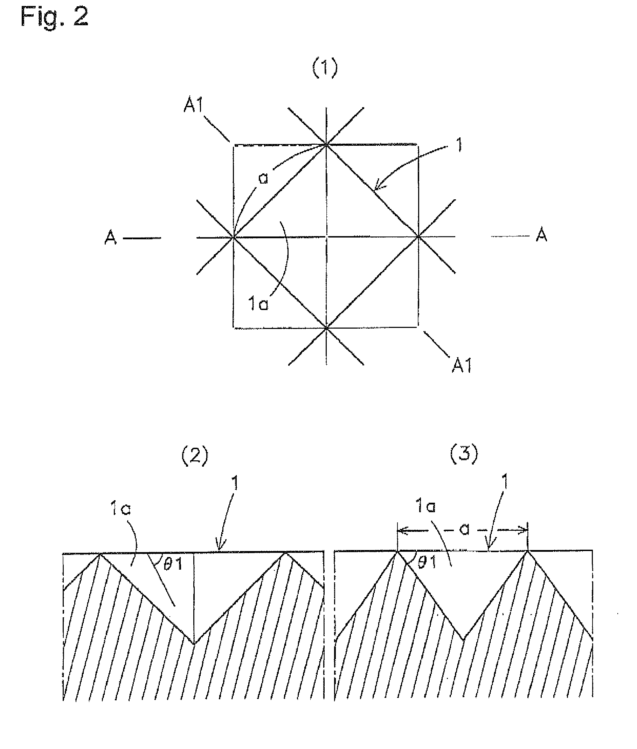

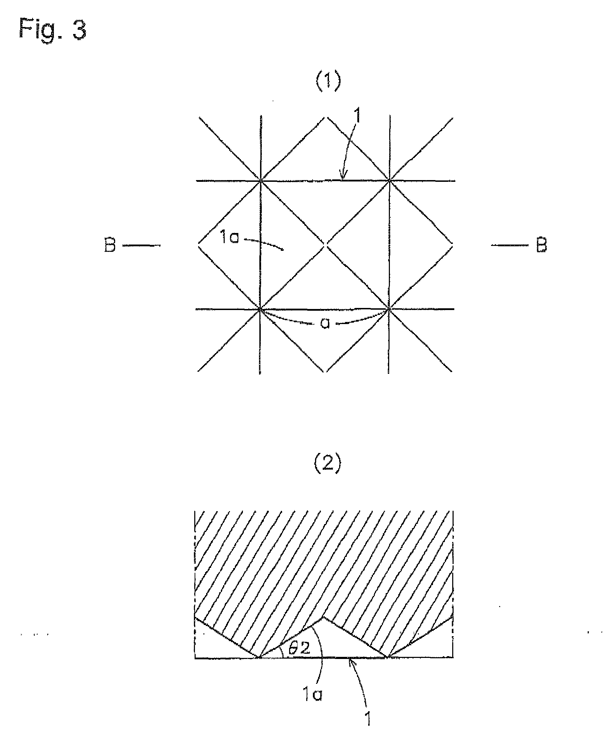

(1) and (2) in Fig. 1 are a diagrammatic plan view and diagrammatic bottom view of a light diffusing sheet according to one embodiment of the invention. (1), (2), and (3) in Fig. 2 are an enlarged plan view of part of the sheet upper surface serving as a light emission side of the light diffusing sheet, a sectional view thereof taken on the line A-A, and a sectional view thereof taken on the line A1-A1, (1) and (2) in Fig. 3 are an enlarged plan view of part of the sheet lower surface serving as a light entrance side of the light diffusing sheet and a sectional view thereof taken on the line B-B.

This light diffusing sheet S1 is a sheet which is made of a light-transmitting resin and is to be used after having been disposed over linear light sources L disposed in parallel in a lengthwise or crosswise direction at a given interval, such as the cold cathode fluorescent lamps in a direct-backlight unit. As shown in (1) in Fig. 1, many small recesses 1 having the shape of an inverted regular quadrangular pyramid have been closely formed in an oblique-line arrangement at an angle of 45° in the sheet upper surface serving as a light emission side. In the sheet lower surface serving as a light entrance side, on the other hand, many small recesses 1 having the shape of an inverted regular quadrangular pyramid have been closely formed in a lengthwise and crosswise arrangement as shown in (2) in Fig. 1. The small recesses 1 in the sheet upper surface need not have always been formed in an oblique-line arrangement at an angle of 45°, and may have been formed in an oblique-line arrangement at an angle of 30°-60°.

This light diffusing sheet S1 is made of a light-transmitting thermoplastic resin having a high total light transmittance, such as a polycarbonate, polyester, polyethylene, polypropylene, polyolefin copolymer (e.g., poly(4-methylpentene-1)), poly(vinyl chloride), cyclic polyolefin (e.g., norbornene structure), acrylic resin, polystyrene, ionomer, or styrene/methyl methacrylate copolymer resin (MS resin). The light diffusing sheet S1 to be used preferably is one having a thickness of about 0.3-5 mm.

Among the light diffusing sheets made of those thermoplastic resins, the light diffusing sheet made of a polycarbonate, polyester (especially poly(ethylene terephthalate)), and cyclic polyolefin has satisfactory heat resistance. When incorporated in a backlight unit, these light diffusing sheets are less apt to be deformed, rumpled, or otherwise by the heat emitted by the linear light sources L such as cold cathode fluorescent lamps. It is therefore preferred to use these light diffusing sheets. In particular, it is exceedingly preferred to use a sheet made of a polycarbonate because it has satisfactory transparency and low hygroscopicity, attains a high luminance, and is reduced in warpage.

Furthermore, a sheet made of polypropylene has satisfactory crystallinity and transparency. When the polypropylene has an increased degree of crystallinity, this sheet has an improved elastic modulus, is less apt to suffer thermal deformation and rumpling, and has an increased refractive index. This sheet hence has an advantage that when a light diffusing agent is to be incorporated into the sheet as will be described later, the difference in refractive index between the polypropylene and the light diffusing agent is small and this results in an increased quantity of transmitted light and hence in an increased luminance, etc. Use of this sheet is therefore preferred. In particular, a sheet made of polypropylene having a degree of crystallinity of 30-80% has high rigidity and has a refractive index of about 1.48-1.52, which is close to the refractive index of talc powders (1.54), use of which as a light diffusing agent is preferred as will be stated later. Because of this, even when a talc powder is contained, a light diffusing film having a high total light transmittance and attaining a high luminance can be obtained. The degree of crystallinity of the polypropylene is more preferably 50-60%.

This light diffusing sheet S1 suitably contains ingredients necessary for molding, such as a stabilizer, lubricant, impact modifier, antioxidant, ultraviolet absorber, light stabilizer, antistatic agent, colorant, and fluorescent brightener. In some cases, the sheet contains the light diffusing agent which will be described later.

In this light diffusing sheet S1, both the small recesses 1 formed in an oblique-line arrangement in the sheet upper surface serving as a light emission side and the small recesses 1 formed in a lengthwise and crosswise arrangement in the sheet lower surface serving as a light entrance side are small recesses having the shape of an inverted regular quadrangular pyramid. The small recesses 1 in the sheet upper surface and those in the sheet lower surface are equal to each other in the length of each side a of the square opening, but differ from each other in the inclined angle of the inclined faces. The inclined angle θ1 between the horizontal plane and the inclined face 1a of each small recess 1 formed in the sheet upper surface (see Fig. 2) has been regulated so as to be larger than the inclined angle θ2 between the horizontal plane and the inclined face 1a of each small recess 1 formed in the sheet lower surface (see Fig. 3).

Namely, in this light diffusing sheet S1, the inclined angle θ2 of the inclined face 1a of each small recess 1 formed in the sheet lower surface serving as a light entrance side has been regulated so as to be in the range of from 10° to less than 40° (10°≤θ2<40°) and the inclined angle θ1 of the inclined face 1a of each small recess 1 formed in the sheet upper surface serving as a light emission side has been regulated to a value lager than the inclined angle θ2 and in the range of from 40° to 55° (40°≤θ1≤55°), in order to heighten the average luminance and uniformity of luminance of the diffused light which has passed through the sheet S1 and is being emitted. These ranges of the inclined angles θ2 and θ1 can be slightly widened. The inclined angle θ2 can be regulated to a value in the range of from above 5° to less than 40° (5°<θ2<40°), and the inclined angle θ1 can be regulated to a value in the range of from above 35° to 60° (35°<θ1≤60°).

In case where the inclined angle θ2 for the small recesses 1 in the sheet lower surface is 5° or smaller, this sheet lower surface is close to a flat surface, resulting in reduced uniformity of luminance as in the conventional light diffusing sheet in which the sheet lower surface is flat. In case where the inclined angle θ2 is 40° or larger, the incident light emitted from linear light sources L is refracted by the inclined faces 1a of the small recesses 1 in the sheet lower surface and spreads laterally. As a result, light scattering is enhanced or total reflection occurs within the sheet, resulting in a reduced average luminance. On the other hand, in case where the inclined angle θ1 for the small recesses 1 in the sheet upper surface serving as a light emission side exceeds 60°, a larger proportion of the light undergoes total reflection at the sheet upper surface, resulting in a reduced average luminance. In case where the inclined angle θ1 is 35° or smaller and is equal to or smaller than the inclined angle θ2 for the small recesses 1 in the sheet lower surface, this results in a reduced average luminance and reduced uniformity of luminance.

When small recesses 1 having the shape of an inverted regular quadrangular pyramid are to be formed in order in a sheet upper surface and in a sheet lower surface, it is preferred to regulate the length of each side a of the square openings thereof to about 30-600 µm. So long as small recesses 1 having such a size are formed, the light emitted from linear light sources L can be sufficiently diffused by the four inclined faces 1a of each small recess 1. In case where the length of each side a is shorter than 30 µm, it is difficult to form such small recesses 1 having the shape of an inverted regular quadrangular pyramid. In case where the length of each side a is larger than 600 µm, the function of diffusing light decreases considerably. Both cases are therefore undesirable. A more preferred range of the length of each side a of the small recesses 1 is 100-500 µm.

This light diffusing sheet S1 can be efficiently mass-produced, for example, by forming the light-transmitting resin described above into a sheet having a given thickness by melt extrusion and passing this sheet between upper and lower embossing rolls having projections of a regular quadrangular pyramid shape formed in order thereon to thereby form small recesses 1 having the shape of an inverted regular quadrangular pyramid in an oblique-line arrangement in the sheet upper surface and simultaneously form small recesses 1 having the shape of an inverted regular quadrangular pyramid in a lengthwise and crosswise arrangement in the sheet lower surface. Alternatively, the light diffusing sheet S1 can be easily produced by press-forming a light-transmitting resin sheet between upper and lower pressing dies having projections of a regular quadrangular pyramid shape formed in order thereon. Furthermore, the light diffusing sheet S1 can be produced also by an injection molding method in which a molten resin is injected into a mold having projections of a regular quadrangular pyramid shape formed in order therein, or by a method in which a UV-curable resin is applied to a base sheet and this coated base sheet is pressed with upper and lower embossing rolls having projections of a regular quadrangular pyramid shape formed in order thereon to transfer the roll shapes to the uncured UV-curable resin and is then irradiated with ultraviolet to cure the resin.

The light diffusing sheet S1 produces the following effects when it is incorporated in a direct-backlight unit so as to be disposed over parallel linear light sources L and the linear light sources L are turned on. Since the sheet lower surface serving as a light entrance side has small recesses 1 having the shape of an inverted regular quadrangular pyramid formed therein in a lengthwise and crosswise arrangement, the light emitted from the linear light sources L is refracted and diffused by the inclined faces 1a of the small recesses 1. The light hence readily enters not only those regions of the light diffusing sheet S1 which are located over the spaces between linear light sources L and L but also that region of the light diffusing sheet S1 which is located over each linear light source L. This results in reduced unevenness of the quantity of incident light throughout the whole light diffusing sheet S1. The light which has entered almost evenly is refracted and diffused by the inclined faces 1a of the small recesses 1 having the shape of an inverted regular quadrangular pyramid which have been formed in an oblique-line arrangement in the sheet upper surface serving as a light emission side. The light is hence emitted as more even diffused light through the sheet upper surface. Consequently, the uniformity of luminance is improved. In particular, since the inclined angle θ2 for the small recesses 1 in the sheet lower surface in this light diffusing sheet S1 has been regulated so as to be in the range of from 10° to less than 40° and the inclined angle θ1 for the small recesses 1 in the sheet upper surface therein has been regulated so as to be larger than the inclined angle θ2 and be in the range of from 40° to 55°, the uniformity of luminance and average luminance are remarkably improved as described above. When the ranges of the inclined angles θ2 and θ1 are widened and regulated so as to be from above 5° to less than 40° and be from above 35° to 60°, respectively, then the uniformity of luminance and average luminance are remarkably improved in this case also. Consequently, the direct-backlight unit of the invention which includes the light diffusing sheet disposed over the linear light sources is effective in omitting the light diffusing films which have conventionally been necessary for heightening uniformity of luminance or in considerably reducing the number of the films (e.g., to 1). Because of this, the number of parts and the number of assembly steps are reduced, whereby a production cost reduction can be attained.

Furthermore, the light diffusing sheet in which small recesses 1 only have been formed in order in the sheet upper surface and sheet lower surface and no small protrusions have been formed therein, like the light diffusing sheet S1 described above, has the following advantages. When this sheet S1 is incorporated in a backlight unit together with a conventional light diffusing film for uniformity of luminance enhancement superposed thereon, this light diffusing film is not damaged by small protrusions on the sheet upper surfaces. Furthermore, in producing this sheet, the small recesses 1 can be easily formed by merely embossing each side of a sheet and productivity hence improves.

In the light diffusing sheet S1 described above, the small recesses 1 in the sheet upper surface and the small recesses 1 in the sheet lower surface have been formed so as to have the same size (equal in the length of each side a of the square opening). However, the small recesses 1 in the sheet upper surface may be formed so as to be larger than the small recesses 1 in the sheet lower surface. Conversely, the small recesses 1 in the sheet upper surface may be formed so as to be smaller than the small recesses 1 in the sheet lower surface. Furthermore, although the small recesses 1 in the light diffusing sheet S1 have been closely formed in order, small recesses 1 may be formed in order so as to be slightly spaced from one another. However, in the case of forming small recesses 1 in order so as to slightly space them from one another, it is important that the small spaces should be regulated so as to result in an areal proportion of the small recesses 1 in each of the sheet upper surface and the sheet lower surface from 30% to less than 100% and thereby prevent the function of diffusing light from decreasing considerably.

Furthermore, in the light diffusing sheet S1 described above, the small recesses 1 in the sheet upper surface have been formed in an oblique-line arrangement and the small recesses 1 in the sheet lower surface have been formed in a lengthwise and crosswise arrangement. However, the arrangement of small recesses 1 in the sheet upper surface and sheet lower surface may be either an oblique-line one or a lengthwise and crosswise one. In some cases, other arrangements such as, e.g., a zigzag arrangement are possible. It should, however, be noted that when the small recesses 1 in the sheet upper surface have been formed in an oblique-line arrangement and the small recesses 1 in the sheet lower surface have been formed in a lengthwise and crosswise arrangement as in the light diffusing sheet S1. described above, this sheet has the following advantage as described above. The unevenness of the quantity of light entering through the sheet lower side is reduced and even diffused light can be emitted through the sheet upper surface, whereby the uniformity of luminance is further improved.

A light diffusing agent may be evenly incorporated into the light diffusing sheet S1. By thus incorporating a light diffusing agent, the light diffusing function is further improved, resulting in even higher uniformity of luminance. However, too high contents of a light diffusing agent reduce the directivity of diffused light and light transmission, and this reduces rather than increases the luminance. Consequently, it is preferred to regulate the content thereof to 6% by mass or lower, preferably 4% by mass or lower, more preferably 1% by mass or lower.

As the light diffusing agent, use may be made of one of or a combination of two or more of materials differing in refractive index from the light-transmitting resin constituting the light diffusing sheet S1, such as inorganic particulate materials, particulate metal oxides, and particulate organic polymers. As the particulate inorganic materials may be used particles of glasses [glass-A (soda-lime glass), glass-C (borosilicate glass), and glass-E (low-alkali glass)], silica, mica, synthetic mica, calcium carbonate, magnesium carbonate, barium sulfate, talc, montmorillonite, kaolin clay, bentonite, hectorite, silicones, and the like. As the particulate metal oxides may be used particles of titanium oxide, zinc oxide, alumina, and the like. As the particulate organic polymers may be used acrylic beads, styrene beads, and particles of benzoguanamine, etc.

Those light diffusing agents to be used are ones each having an average particle diameter of 0.1-100 µm, preferably 0.5-50 µm, more preferably 1-30 µm. A light diffusing agent having a particle diameter smaller than 0.1 µm is apt to aggregate and hence has poor dispersibility. Even when this light diffusing agent was able to be evenly dispersed, the dispersed particles have an impaired efficiency of light scattering because the wavelengths of the light are longer than the size of the dispersed particles. It is therefore preferred to use particles having a size of 0.5 µm or larger, especially 1 µm or larger. On the other hand, in case where particles having a particle diameter larger than 100 µm are used, this may result in uneven light scattering and a reduced light transmittance. In addition, such particles may be seen with the naked eye. It is therefore preferred to use particles having a size of 50 µm or smaller, especially 30 µm or smaller.

The shape of the small recesses in the light diffusing sheet of the invention should not be construed as being limited only to the shape of an inverted regular quadrangular pyramid described above. However, the shape thereof must be any of the shape of an inverted polyangular pyramid, the shape of an inverted truncated polyangular pyramid, the shape of an inverted cone, and the shape of an inverted truncated cone which each have inclined faces or a tapered surface having the function of refracting and diffusing light. The shape of an inverted truncated polyangular pyramid herein means the shape obtained by horizontally cutting off a lower part, i.e., an apex part of an inverted polyangular pyramid. The shape of an inverted truncated cone means the shape obtained by horizontally cutting off a lower part, i.e., an apex part of an inverted cone. In either shape, however, the cut surface may be a recessed curved surface. Consequently, in the case of small recesses having the shape of, e.g., an inverted truncated cone, the recesses may include small recesses which each as a whole are nearly hemispherical.
The small recesses having a shape which is any of the shape of an inverted polyangular pyramid, the shape of an inverted truncated polyangular pyramid, the shape of an inverted cone, and the shape of an inverted truncated cone may be small recesses in which each edge where faces or surfaces intersect has been rounded.

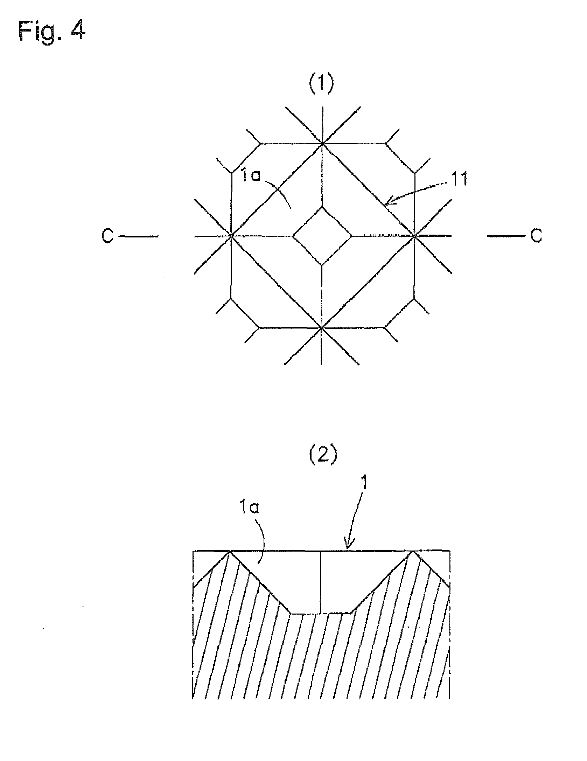

A preferred example of the small recesses having the shape of an inverted polyangular pyramid is the small recesses 1 having the shape of an inverted regular quadrangular pyramid in the light diffusing sheet S1 described above. A preferred example of the small recesses having the shape of an inverted truncated polyangular pyramid is small recesses 11 having the shape of an inverted truncated regular quadrangular pyramid such as that shown in (1) and (2) in Fig. 4. These two kinds of small recesses 1 and 11 each have an advantage that since the small recesses 1 or 11 can be closely formed in an oblique-line or lengthwise and crosswise arrangement to give a light diffusing sheet in which the areal proportion of these small recesses 1 or 11 in the upper surface or lower surface of the sheet is 100%, this light diffusing sheet is excellent in the function of diffusing light. It is a matter of course that small recesses of other shapes such as the shape of an inverted regular hexangular pyramid, the shape of an inverted regular octangular pyramid, the shape of an inverted truncated regular hexangular pyramid, the shape of an inverted truncated regular octangular pyramid, and the like may be formed.

In forming small recesses having a shape which is any of the shape of an inverted polyangular pyramid, the shape of an inverted truncated polyangular pyramid, the shape of an inverted cone, and the shape of an inverted truncated cone, it is important to regulate inclined angle in order to heighten uniformity of luminance and average luminance, as in the case of the small recesses 1 having the shape of an inverted regular quadrangular pyramid described above. Specifically, in the case where small recesses having the shape of an inverted polyangular pyramid or the shape of an inverted truncated polyangular pyramid are to be formed in order in the lower surface of a light diffusing sheet, it is desirable to regulated the inclined angle between the inclined face of each small recess and the horizontal plane so as to be in the range of from 10° to less than 40° as stated above, or in the slightly widened range of from above 5° to less than 40°. In the case where such small recesses are to be formed in order in the upper surface of a light diffusing sheet, it is desirable to regulate the inclined angle of the inclined face to a value larger than that inclined angle and in the range of from 40° to 55°, or in the slightly widened range of from above 35° to 60°. In the case where small recesses having the shape of an inverted cone or the shape of an inverted truncated cone are to be formed in order in the lower surface of a light diffusing sheet, it is desirable to regulate the inclined angle between the ridgeline of each small recess and the horizontal plane so as to be in the range of from 10° to less than 40°, or in the slightly widened range of from above 5° to less than 40°. In the case where such small recesses are to be formed in order in the upper surface of a light diffusing sheet, it is desirable to regulate the inclined angle of the ridgeline so as to be in the range of from 40° to 55°, or in the slightly widened range of from above 35° to 60°. It is preferred that the size (size of opening) of those small recesses should be regulated so as to be almost the same as the size (size of opening) of the small recesses 1 having the shape of an inverted regular quadrangular pyramid described above.

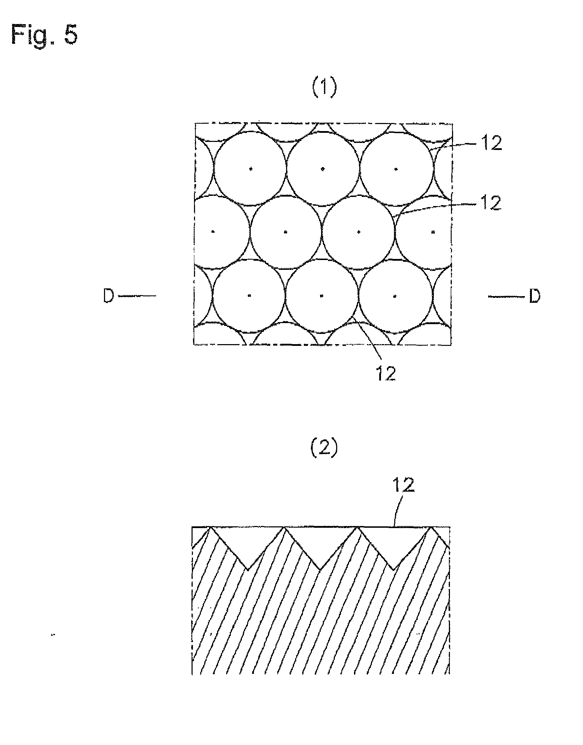

In the case where small recesses having the shape of an inverted cone (or the shape of an inverted truncated cone) are to be formed in an oblique-line arrangement, it is preferred that the small recesses 12 having the shape of an inverted cone (or the shape of an inverted truncated cone) should be formed in an oblique-line arrangement at an angle of 60° as shown in (1) and (2) in Fig. 5 rather than in an oblique-line arrangement at an angle of 45°. In this oblique-line arrangement at an angle of 60°, the small recesses 12 having the shape of an inverted cone (or the shape of an inverted truncated cone) are in contact with one another and in a closest-packing arrangement. This arrangement has an advantage that the areal proportion of the small recesses 12 in the upper surface or lower surface of the light diffusing sheet is maximized and, hence, the function of diffusing light is improved. It is preferred from the standpoint of production that a deepest part of each of the small recesses 12 having the shape of an inverted cone or small recesses having the shape of an inverted polyangular pyramid should be suitably rounded.

The light diffusing sheet of the invention should not be construed as being limited to ones in which the small recesses described above have been formed in order in each of the upper and lower surfaces. It includes: a light diffusing sheet in which small protrusions having any of the shape of a polyangular pyramid, the shape of a truncated polyangular pyramid, the shape of a cone, and the shape of a truncated cone which each have inclined faces or a tapered surface having the function of refracting and diffusing light have been formed in order, in place of the small recesses described above, in each of the upper and lower surfaces of the sheet; and a light diffusing sheet in which such small protrusions have been formed in order in either of the upper and lower surfaces of the sheet and the small recesses described above have been formed in order in the opposite surface. The shape of a truncated polyangular pyramid herein means the shape obtained by horizontally cutting off an apex part of a polyangular pyramid. The shape of a truncated cone means the shape obtained by horizontally cutting off an apex part of a cone. In either shape, however, the cut surface may be a protrudent curved surface. Consequently, in the case of small protrusions having the shape of, e.g., a truncated cone, the protrusions may include small protrusions which each as a whole are nearly hemispherical.

In this light diffusing sheet, the arrangement of small protrusions may be either an oblique-line one or a lengthwise and crosswise one, or may be another arrangement, e.g., a zigzag arrangement. However, in the case where small protrusions are to be formed in a sheet lower surface serving as a light entrance side, it is preferred to form the small protrusions in a lengthwise and crosswise arrangement so as to reduce unevenness of the quantity of incident light throughout the whole sheet lower surface. In the case where small protrusions are to be formed in a sheet upper surface serving as a light emission side, it is preferred to form the small protrusions in an oblique-line arrangement at an angle of 45° (or at an angle of 60° in the case of small protrusions having the shape of a cone or truncated cone) so as to emit more even diffused light. However, the small protrusions may be formed in an oblique-line arrangement at an angle of 30°-60°.

In the case where small protrusions are to be formed in order in a sheet lower surface for the purpose of heightening average luminance and uniformity of luminance, it is desirable to regulate the inclined angle between the inclined face or ridgeline of each small protrusion and the horizontal plane so as to be in the range of from 10° to less than 40° or in the slightly widened range of from above 5° to less than 40°, as in the case of the small recesses described above. In the case where small protrusions are to be formed in order in a sheet upper surface for that purpose, it is desirable to regulate the inclined angle between the inclined face or ridgeline of each small protrusion and the horizontal plane to a value larger than that inclined angle and in the range of from 40° to 55° or in the slightly widened range of from above 35° to 60°, as in the case of the small recesses described above. It is preferred that the size (seize of base) of these small protrusions should be regulated so as to be almost the same as the size (size of opening) of the small recesses 1 having the shape of an inverted regular quadrangular pyramid described above to thereby enable the light diffusing sheet to sufficiently perform the function of diffusing light.

Besides being a single-layer sheet of a light-transmitting resin, the light diffusing sheet to be used may be a light-transmitting-resin sheet having a two-layer or three-layer structure composed of a core layer made of a light-transmitting resin and a surface layer made of a light-transmitting resin and superposed on and united with one or each side of the core layer. For example, use may be made of a light diffusing sheet having a multilayer structure obtained by forming an MS resin layer as a surface layer on one side or each side of a polycarbonate layer as a core layer in order to improve surface hardness and weatherability.

The light diffusing sheet of the invention includes a light diffusing sheet obtained by forming the small recesses or small protrusions in order in each of the sheet upper surface serving as a light emission side and the sheet lower surface serving as a light entrance side of the multilayered sheet so that the inclined angle between the horizontal plane and the inclined face or ridgeline of each small recess or small protrusion formed in the sheet upper surface is larger than that of each small recess or small protrusion formed in the sheet lower surface. In such a light diffusing sheet having a two-layer or three-layer structure, the light diffusing agent described above may be incorporated into the core layer or the surface layers, and an ultraviolet absorber and an antistatic agent may be incorporated into the surface layers. The contents of each of these additives in the respective layers may differ.

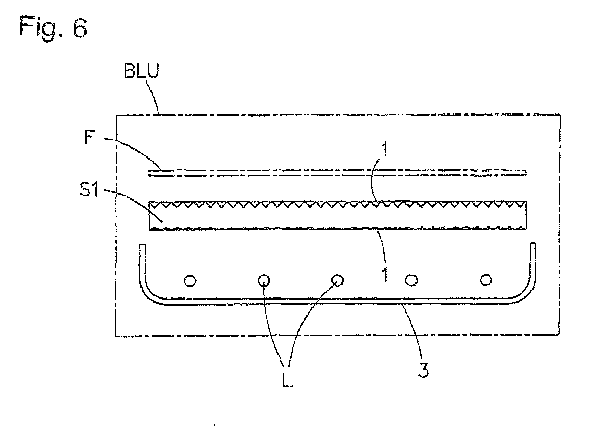

Fig. 6 is a schematic view illustratingadirect-backlight unit in which the light diffusing sheet S1 has been incorporated.

This backlight unit BLU includes: linear light sources L (e.g., cold cathode fluorescent lamps having a diameter of 3 µm) disposed in parallel at a given distance (e.g., 24 mm); a light reflector 3 disposed under the linear light sources L so as to extend to both sides thereof; and the light diffusing sheet S1 disposed over the linear light sources L at a given vertical distance (e.g., the distance between the upper end of each linear light source L and the sheet lower surface is about 13 mm). In this backlight unit BLU, the light diffusing sheet S1 by itself attains a sufficient average luminance and sufficient uniformity of luminance and, hence, a light diffusing film F which is indispensable for conventional backlight units has been omitted. In the case where the average luminance and uniformity of luminance are desired to be further heightened, one light diffusing film F may be superposed on the light diffusing sheet S1.

As described above, the direct-backlight unit BLU, in which the light diffusing sheet S1 of the invention has been incorporated, can have an excellent average luminance and excellent uniformity of luminance although light diffusing films F which are indispensable in conventional units have been omitted. When one light diffusing film F is superposed on the light diffusing sheet S1, an even higher average luminance and better uniformity of luminance can be obtained. Because light diffusing films F can be omitted or the number thereof can be reduced to 1, the number of parts and the number of assembly steps can be reduced accordingly. A cost reduction can hence be attained.

In this direct-backlight unit BLU, a lens film or luminance-improving film for improving the directivity of emitted light toward the vertical direction may be disposed over the light diffusing sheet S1 or over the light diffusing film F.

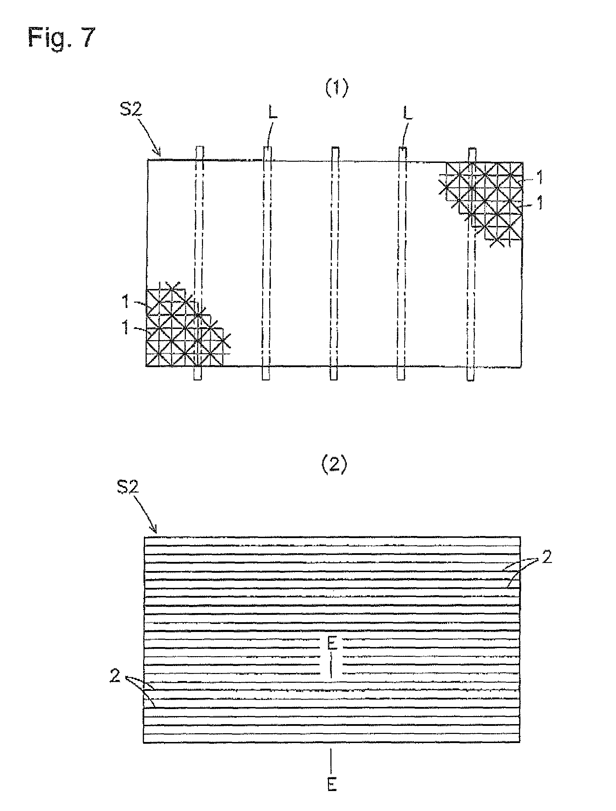

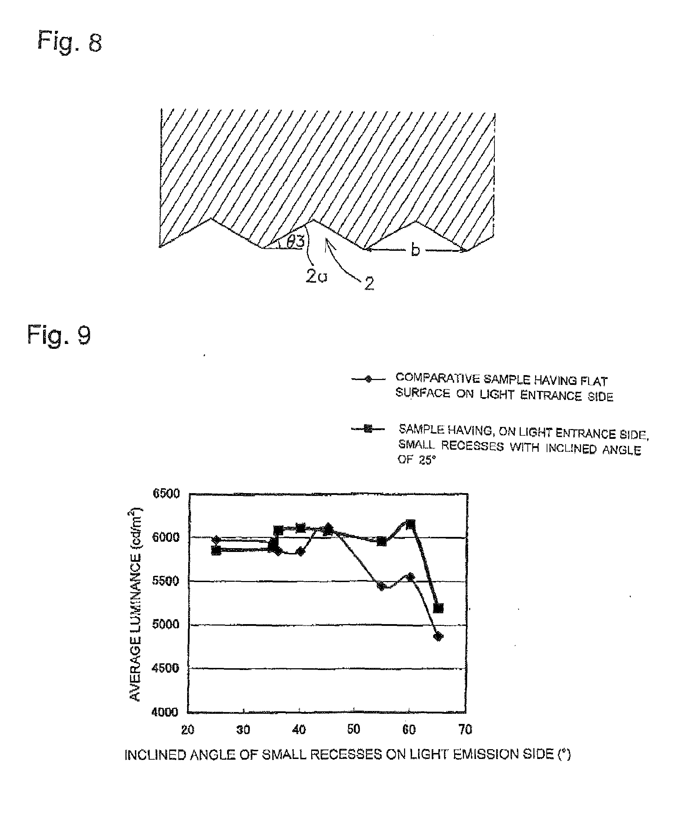

(1) in Fig. 7 is a diagrammatic plan view of a light diffusing sheet according to a further embodiment of the invention; and (2) is a diagrammatic bottom view of the light diffusing sheet. Fig. 8 is an enlarged sectional view taken on the line E-E of (2) in Fig. 7; the view shows part of the sheet lower surface serving as a light entrance side of the light diffusing sheet.

This light diffusing sheet S2 has the small recesses 1 having the shape of an inverted regular quadrangular pyramid described above which have been closely formed in an oblique-line arrangement at an angle of 45° in the sheet upper surface serving as a light emission side. In the sheet lower surface serving as a light entrance side, on the other hand, V-shape small grooves 2 with inclined faces 2a having the function of refracting and diffusing light have been closely formed in a lateral parallel arrangement . The inclined angle θ3 between the inclined face 2a of each small groove 2 and the horizontal plane has been regulated so as to be in the range of from 10° to less than 40°, or in the slightly widened range of from above 5° to less than 40°. Furthermore, the inclined angle θ1 between the inclined face 1a of each small recess 1 and the horizontal plane (see Fig. 2) has been regulated to a value larger than that inclined angle θ3 and in the range of from 40° to 55°, or in the slightly widened range of from above 35° to 60°.

Small grooves 2 may be formed in a vertical parallel arrangement. However, the formation of small grooves 2 in a lateral (the direction perpendicular to the linear light sources L) parallel arrangement as in this embodiment is preferred because this arrangement is effective in reducing unevenness of the quantity of incident light. The width dimension b of these small grooves 2 is preferably regulated to about 30-600 µm. So long as small grooves 2 having such a width dimension are formed, this light diffusing sheet can sufficiently perform the function of refracting and diffusing light due to the two inclined faces 2a respectively on both sides of each small groove 2. A more preferred range of the width dimension b of the small grooves 2 is 100-500 µm. In place of these small grooves 2, triangular small ridges having almost the same width dimension and inclined angle as the small grooves may be formed in order.

In this light diffusing sheet S2, the small recesses 1 formed in order in the sheet upper surface serving as a light emission side are equal to the small recesses 1 formed on the light emission side of the light diffusing sheet S1 described above. An explanation thereon is hence omitted.

This light diffusing sheet S2 also produces the following effect. The small grooves 2 formed in order in the sheet lower surface serving as a light entrance side, in which the inclined angle of the inclined face is in the range of from 10° to less than 40° or in the range of from above 5° to less than 40°, have the function of refracting and scattering light. The small recesses 1 formed in order in the sheet upper surface serving as a light emission side, in which the inclined angle of the inclined face is in the range of from 40° to 55° or in the range of from above 35° to 60°, also have the function of refracting and scattering light. Due to these function, average luminance and uniformity of luminance can be heightened.

An explanation is then given on Examples, which are more specific embodiments supporting the effects of the light diffusing sheets of the invention.

### [EXAMPLE 1]

A polycarbonate sheet having a length of 200 mm, width of 200 mm, and thickness of 2 mm (containing no additives such as a dispersing agent) was press-formed with upper and lower pressing dies. Thus, eight light diffusing sheet samples 1 to 8 were produced in each of which the sheet lower surface serving as a light entrance side had small recesses having the shape of an inverted regular quadrangular pyramid and having a inclined angle between the inclined face and the horizontal plane of 25° (length of each side of the opening: 200 µm) closely formed therein in a lengthwise and crosswise arrangement and the sheet upper surface serving as a light emission side had small recesses having the shape of an inverted regular quadrangular pyramid (length of each side of the opening: 200 µm) closely formed therein in an oblique-line arrangement at an angle of 45°. In these eight samples 1 to 8, the inclined angles between the inclined face in the sheet upper surface and the horizontal plane were 25°, 35°, 36°, 40°, 45°, 55°, 60°, and 65°, respectively.

Subsequently, each of the light diffusing sheet samples was disposed, at a vertical distance of 13 mm, over cold cathode fluorescent lamps (thickness, 3 mm) arranged in parallel at a distance of 24 mm. Color and luminance meter BM-7 (manufactured by TOPCON CORP.) was used to measure the luminance of regions in the sample which were located over the light sources (luminance directly over the cold cathode fluorescent lamps) and the luminance of regions located between the light sources (luminance between cold cathode fluorescent lamps) under the conditions of a measuring distance of 500 mm and a viewing angle of 1°. These measured values were averaged to determine an average luminance. The results obtained are shown in Table 1 given latter. A graph showing the relationship between the average luminance and the inclined angle of the inclined faces of the small recesses formed in order on the light emission side is given in Fig. 9.

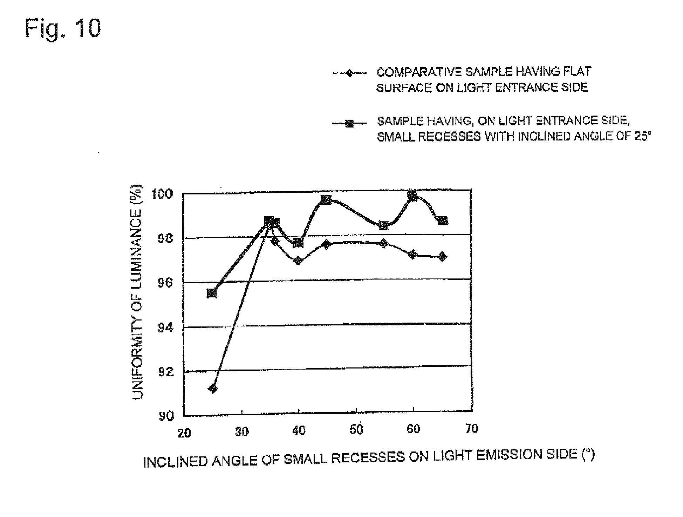

Furthermore, a ratio between the luminance of regions over the light sources and the luminance of regions between the light sources is expressed by the conception called "uniformity". The higher and the lower of the luminances were used as a denominator and a numerator, respectively, to calculate the uniformity of luminance of each of the samples 1 to 8. The results obtained are also shown in the following Table 1. A graph showing the relationship between the uniformity of luminance and the inclined angle of the inclined faces of the small recesses formed in order on the light emission side is given in Fig. 10.

### [COMPARATIVE EXAMPLE 1]

For the purpose of comparison, eight comparative light diffusing sheet samples 9 to 16 were produced in each of which the sheet lower surface serving as a light entrance side had a inclined angle of 0° (flat surface) and the sheet upper surface serving as a light emission side had small recesses having the shape of an inverted regular quadrangular pyramid (length of each side of the opening: 200 µm) closely formed therein in an oblique-line arrangement at an angle of 45°. In these eight comparative samples 9 to 16, the inclined angles between the inclined face in the sheet upper surface and the horizontal plane were 25°, 35°, 36°, 40°, 45°, 55°, 60°, and 65°, respectively. Values of average luminance and uniformity of luminance were determined in the same manners as described above. The results obtained are also shown in Table 1. A graph showing the relationship between the average luminance and the inclined angle of the inclined faces of the small recesses formed on the light emission side is also given in Fig. 9. Furthermore, a graph showing the relationship between the inclined angle of the inclined faces of the small recesses and the uniformity of luminance is also given in Fig. 10.

**[Table 1]**

| Sample No. | Inclined angle of small recesses on light entrance side (°) | Inclined angle of small recesses on light emission side (°) | Average luminance (cd/m²) | Uniformity of luminance (%) |
|---|---|---|---|---|
| 1 | 25 | 25 | 5859 | 95.5 |
| 2 | 25 | 35 | 5883 | 98.7 |
| 3 | 25 | 36 | 6081 | 98.6 |
| 4 | 25 | 40 | 6108 | 97.7 |
| 5 | 25 | 45 | 6078 | 99.6 |
| 6 | 25 | 55 | 5960 | 98.4 |
| 7 | 25 | 60 | 6147 | 99.7 |
| 8 | 25 | 65 | 5191 | 98.6 |
| 9 | 0 (flat surface) | 25 | 5936 | 91.2 |
| 10 | 0 (flat surface) | 35 | 5948 | 98.5 |
| 11 | 0 (flat surface) | 36 | 5846 | 97.8 |
| 12 | 0 (flat surface) | 40 | 5842 | 96.9 |
| 13 | 0 (flat surface) | 45 | 6119 | 97.6 |
| 14 | 0 (flat surface) | 55 | 5445 | 97.6 |
| 15 | 0 (flat surface) | 60 | 5547 | 97.1 |
| 16 | 0 (flat surface) | 65 | 4872 | 97.0 |

The following can be seen from Table 1 and the graphs in Fig. 9. The comparative samples, in which the light entrance side is a flat surface, abruptly decrease in average luminance as the inclined angle of the inclined faces of the small recesses formed on the light emission side increases beyond 45°. In contrast, the light diffusing sheet samples according to the invention, in which small recesses having an inclined-face inclined angle of 25° have been formed in order on the light entrance side, retain a high average luminance when the inclined angle of the inclined faces of the small recesses formed on the light emission side is in the range of 36°-60°, and decrease in average luminance as the inclined-face inclined angle on the light emission side increases beyond 60°. It can hence be seen that in these light diffusing sheets according to the invention, which have small recesses formed in order on the light entrance side, not only to regulate the inclined angle of the inclined faces of the small recesses to be formed in order in the sheet upper surface serving as a light emission side to a value in the range of from 40° to 55° is, of course, effective in heightening average luminance, but also to regulate the inclined-face inclined angle on the light emission side so as to be in a slightly widened range of from above 35° to 60° is effective.

Table 1 and the graphs in Fig. 10 show the following. The comparative samples, in which the light entrance side is a flat surface, as a whole are lower in uniformity of luminance than the samples according to the invention, in which small recesses have been formed in order on the light entrance side. It can hence be seen that to form small recesses in order on the light entrance side is effective in heightening the uniformity of luminance. However, the samples in which small recesses have been formed in order on the light entrance side but the small recesses formed in order on the light emission side have too small an inclined-face inclined angle are poor in uniformity of luminance. Judging from the graphs in Fig. 10, it is necessary for securing a uniformity of luminance to regulate the small recesses on the light emission side so as to have a inclined angle larger than 35°. When this is taken into account in combination with the fact that the regulation of the small recesses on the light emission side so as to have a inclined angle larger than 35° and not larger than 60° is effective in heightening average luminance as stated above, then it can be considered that a maximum range of suitable inclined angles of the inclined faces of the small recesses to be formed in order on the light emission side is from above 35° to 60°.

### [EXAMPLE 2]

A polycarbonate sheet was press-formed with upper and lower pressing dies in the same manner as in Example 1 to produce nine light diffusing sheet samples 17 to 25 in each of which the sheet upper surface serving as a light emission side had small recesses having the shape of an inverted regular quadrangular pyramid and having a inclined angle between the inclined face and the horizontal plane of 45° (length of each side of the opening: 200 µm) closely formed therein in an oblique-line arrangement at an angle of 45° and the sheet lower surface serving as a light entrance side had small recesses having the shape of an inverted regular quadrangular pyramid (length of each side of the opening: 200 µm) closely formed therein in a lengthwise and crosswise arrangement. In these nine samples 17 to 25, the inclined angles between the inclined face in the sheet lower surface and the horizontal plane were 0° (flat surface), 5°, 6°, 10°, 15°, 25°, 35°, 40°, and 45°, respectively.

In the same manner as described above, eight light diffusing sheet samples 26 to 33 were produced in each of which the sheet upper surface serving as a light emission side had small recesses having the shape of an inverted regular quadrangular pyramid and having a inclined angle between the inclined face and the horizontal plane of 55° (length of each side of the opening: 200 µm) closely formed therein in an oblique-line arrangement, at an angle of 45° and the sheet lower surface serving as a light entrance side had small recesses having the shape of an inverted regular quadrangular pyramid (length of each side of the opening); 200 µm) closely formed therein in a lengthwise and crosswise arrangement. In these eight samples 26 to 33, the inclined angles between the inclined face in the sheet lower surface and the horizontal plane were 0° (flat surface), 5°, 6°, 10°, 15°, 25°, 35°, and 40°, respectively.

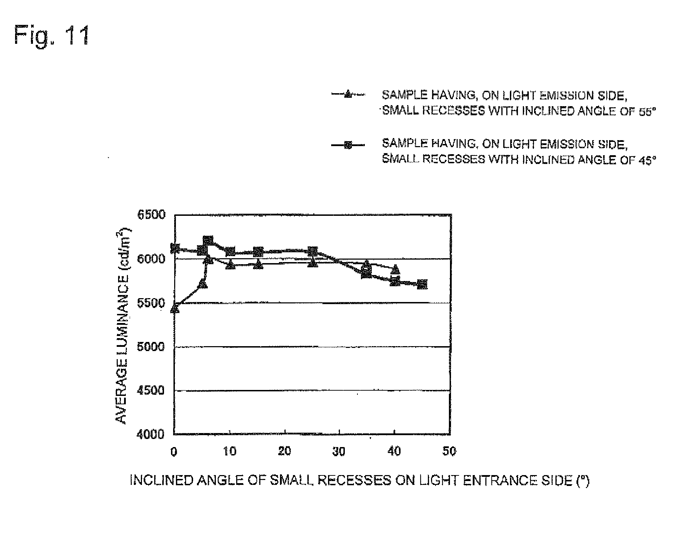

The samples 17 to 33 were examined for average luminance and uniformity of luminance in the same manners as in Example 1. The results obtained are shown in Table 2. Graphs showing the relationship between the average luminance and the inclined angle of the small recesses formed on the light entrance side are given in Fig. 11. Furthermore, graphs showing the relationship between the inclined angle of these small recesses and the uniformity of luminance are given in Fig, 12.

**[Table 2]**

| Sample No. | Inclined angle of small recesses on light entrance side (°) | Inclined angle of small recesses on light emission slide (°) | Average luminance (cd/m²) | Uniformity of luminance (%) |
|---|---|---|---|---|
| 17 | 0 (flat surface) | 45 | 6119 | 97.6 |
| 18 | 5 | 45 | 6090 | 98.3 |
| 19 | 6 | 45 | 6198 | 99.0 |
| 20 | 10 | 45 | 6078 | 99.1 |
| 21 | 15 | 45 | 6072 | 99.2 |
| 22 | 25 | 45 | 6078 | 99.6 |
| 23 | 35 | 45 | 5830 | 99.4 |
| 24 | 40 | 45 | 5747 | 99.0 |
| 25 | 45 | 45 | 5706 | 99.0 |
| 26 | 0 (flat surface) | 55 | 5445 | 97.6 |
| 27 | 5 | 55 | 5723 | 98.4 |
| 28 | 6 | 55 | 6002 | 99.5 |
| 29 | 10 | 55 | 5936 | 99.2 |
| 30 | 15 | 55 | 5936 | 99.0 |
| 31 | 25 | 55 | 5960 | 98.4 |
| 32 | 35 | 55 | 5948 | 99.8 |
| 33 | 40 | 55 | 5883 | 99.3 |

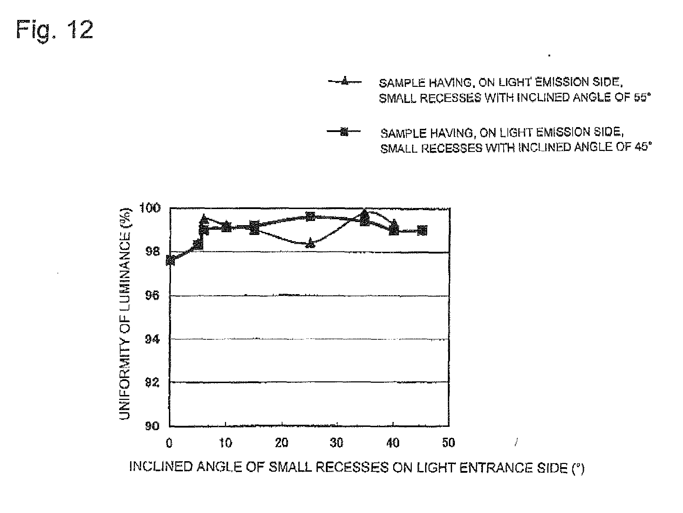

The following can be seen from Table 2 and the graphs in Fig. 11. The samples in which the small recesses on the light emission side have a inclined angle of 55° decrease in average luminance as the inclined angle of the small recesses on the light entrance side decreases to 5° or smaller. As the inclined angle of the small recesses on the light entrance side approaches 40°, both the samples in which the inclined angle of the small recesses on the light emission side is 45° and the samples in which that inclined angle is 55° decrease in average luminance. The reason for this is thought to be as follows, When the small recesses on the light entrance side have too large a inclined angle, incident light spreads laterally and this enhances light scattering and increases total light reflection within the sheet, resulting in a decrease in luminance. The following can be seen from Table 2 and the graphs in Fig. 12. The uniformity of luminance decreases as the inclined angle of the small recesses on the light entrance side decreases to 5° or smaller. It is therefore necessary for securing a uniformity of luminance that the inclined angle of the small recesses on the light entrance side should be regulated so as to be larger than 5°. When this is taken into account in combination with the fact that average luminance decreases as the inclined angle of those small recesses approaches 40°, it can be considered that a maximum range of suitable inclined angles for the small recesses on the light entrance side is from above 5° to less than 40°.

### [EXAMPLE 3]

A polycarbonate sheet was press-formed with upper and lower pressing dies to thereby produce a light diffusing sheet sample 34 in which the sheet upper surface serving as a light emission side had small recesses having the shape of an inverted regular quadrangular pyramid and having an inclined-face inclined angle of 45° (length of each side of the opening: 200 µm) closely formed therein in an oblique-line arrangement at an angle of 45° and the sheet lower surface serving as a light entrance side had V-shaped small grooves having an inclined-face inclined angle of 25° (width dimension: 200 µm) closely formed therein in a vertical parallel arrangement. Furthermore, a light diffusing sheet sample 35 was produced which had the same constitution as the sample 34 described above, except that V-shaped small grooves were formed in a lateral parallel arrangement.

These samples 34 and 35 were examined for average luminance, and uniformity of luminance in the same manners as in Example 1. As a result, the sample 34 was found to have an average luminance of 6,030 cd/m² and a uniformity of luminance of 98.1%, while the sample 35 was found to have an average luminance of 6,036 cd/m² and a uniformity of luminance of 99.4%. It can be seen from these results that to form light-entrance-side small grooves laterally (in the direction perpendicular to the linear light sources) is more effective in improving uniformity of luminance then to form the small grooves vertically.

### INDUSTRIAL APPLICABILITY

The light diffusing sheets of the invention, when disposed over linear light sources arranged in parallel, bring about a high average luminance, and high uniformity of luminance and are less apt to cause bright/dark stripes. The light diffusing sheets are hence incorporated and used in the direct-backlight units of liquid-crystal displays including ones for notebook type personal computers, ones for personal computer monitors, ones for television receivers, and ones for automotive navigators, in screens for advertising signboards, illumination, or image displaying, and in scanners, copiers, and the like. The backlight units of the invention are usable as the direct-backlight units of various liquid-crystal displays including ones for notebook type personal computers, ones for personal computer monitors, ones for television receivers, and ones for automotive navigators.

## Claims

1. A light diffusing sheet which is made of a light-transmitting resin and has a sheet upper surface serving as a light emission side and a sheet lower surface serving as a light entrance side and in which small recesses having a shape which is any of the shape of an inverted polyangular pyramid, the shape of an inverted truncated polyangular pyramid, the shape of an inverted cone, and the shape of an inverted truncated cone or small protrusions having a shape which is any of the shape of a polyangular pyramid, the shape of a truncated polyangular pyramid, the shape of a cone, and the shape of a truncated cone have been formed in order in the sheet upper surface and sheet lower surface,
wherein the inclined angle between the horizontal plane and the inclined face or ridgeline of each small recess or small protrusion in the sheet upper surface is larger than the inclined angle between the horizontal plane and the inclined face or ridgeline of each small recess or small protrusion in the sheet lower surface.

2. The light diffusing sheet according to claim 1, wherein the small recesses or small protrusions in the sheet upper surface serving as a light emission side have been formed in an oblique-line arrangement and the small recesses or small protrusions in the sheet lower surface serving as a light entrance side have been formed in a lengthwise and crosswise arrangement.

3. The light diffusing sheet according to claim 1 or claim 2, wherein the inclined angle between the horizontal plane and the inclined face or ridgeline of each small recess or small protrusion in the sheet upper surface serving as a light emission side is 40° or larger and not larger than 55°and the inclined angle between the horizontal plane and the inclined face or ridgeline of each small recess or small protrusion in the sheet lower surface serving as a light entrance side is 10° or larger and smaller than 40°.

4. The light diffusing sheet according to claim 1 or claim 2, wherein the inclined angle between the horizontal plane and the inclined face or ridgeline of each small recess or small protrusion in the sheet upper surface serving as a light remission side is larger than 35° and not larger than 60° and the inclined angle between the horizontal plane and the inclined face or ridgeline of each small recess or small protrusion in the sheet lower surface serving as a light entrance side is larger than 5° and smaller than 40°.

5. The light diffusing sheet according to any one of claim 1 to claim 4, wherein the sheet upper surface serving as a light emission side has the small recesses and does not have the small protrusions.

6. The light diffusing sheet according to any one of claim 1 to claim 4, wherein the sheet upper surface serving as a light emission side and the sheet lower surface serving as a light entrance side have the small recesses and do not have the small protrusions.

7. A light diffusing sheet which is made of a light-transmitting resin and has a sheet upper surface serving as a light emission side and a sheet lower surface serving as a light entrance side and in which small recesses having a shape which is any of the shape of an inverted polyangular pyramid, the shape of an inverted truncated polyangular pyramid, the shape of an inverted cone, and the shape of an inverted truncated cone or small protrusions having a shape which is any of the shape of a polyangular pyramid, the shape of a truncated polyangular pyramid, the shape of a cone, and the shape of a truncated cone have been formed in order in the sheet upper surface and V-shaped small grooves or triangular small ridges have been formed in a parallel arrangement in the sheet lower surface,
wherein the inclined angle between the horizontal plane and the inclined face or ridgeline of each small recess or small protrusion in the sheet upper surface is larger than the inclined angle between the horizontal plane and the inclined face of each small groove or small ridge in the sheet lower surface.

8. The light diffusing sheet according to claim 7, wherein the inclined angle between the horizontal plane and the inclined face or ridgeline of each small recess or small protrusion in the sheet upper surface serving as a light emission side is 40° or larger and not larger than 55° and the inclined angle between the horizontal plane and the inclined face of each small groove or small ridge in the sheet lower surface serving as a light entrance side is 10° or larger and smaller than 40°.

9. The light diffusing sheet according to claim 7, wherein the inclined angle between the horizontal plane and the inclined face or ridgeline of each small recess or small protrusion in the sheet upper surface serving as a light emission side is larger than 35° and not larger than 60° and the inclined angle between the horizontal plane and the inclined face of each small groove or small ridge in the sheet lower surface serving as a light entrance side is larger than 5° and smaller than 40°.

10. A backlight unit **characterized by** including the light diffusing sheet according to any one of claim 1 to claim 9 which has been disposed over linear light sources disposed in parallel in a lengthwise or crosswise direction at a given interval.
